(19) Europäisches Patentamt / European Patent Office / Office européen des brevets

(11) **EP 2 347 309 B1**

(12) **EUROPÄISCHE PATENTSCHRIFT**

(45) Veröffentlichungstag und Bekanntmachung des Hinweises auf die Patenterteilung:
**08.01.2020 Patentblatt 2020/02**

(21) Anmeldenummer: **09748236.8**

(22) Anmeldetag: **20.10.2009**

(51) Int Cl.:
**G05B 19/4063** (2006.01) **B25J 9/16** (2006.01)

(86) Internationale Anmeldenummer:
**PCT/EP2009/007516**

(87) Internationale Veröffentlichungsnummer:
**WO 2010/060506 (03.06.2010 Gazette 2010/22)**

(54) **VERFAHREN UND VORRICHTUNG ZUR SICHEREN ERFASSUNG EINER KINEMATISCHEN GRÖSSE EINES MANIPULATORS**

METHOD AND DEVICE FOR RELIABLY CAPTURING A KINEMATIC PARAMETER OF A MANIPULATOR

PROCÉDÉ ET DISPOSITIF POUR LA DÉTECTION FIABLE D'UNE GRANDEUR CINÉMATIQUE D'UN MANIPULATEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.11.2008 DE 102008054312**

(43) Veröffentlichungstag der Anmeldung:
**27.07.2011 Patentblatt 2011/30**

(73) Patentinhaber: **KUKA Deutschland GmbH
86165 Augsburg (DE)**

(72) Erfinder: **ROTH, Stefan
86485 Eisenbrechtshofen (DE)**

(74) Vertreter: **Schlotter, Alexander Carolus Paul
Wallinger Ricker Schlotter Tostmann
Patent- und Rechtsanwälte Partnerschaft mbB
Zweibrückenstrasse 5-7
80331 München (DE)**

(56) Entgegenhaltungen:
EP-A1- 1 955 830      EP-A2- 1 445 075
EP-A2- 1 600 833      US-A1- 2004 215 370

• FREYERMUTH B ED - INSTITUTE OF ELECTRICAL AND ELECTRONICS ENGINEERS: "An approach to model based fault diagnosis of industrial robots" PROCEEDINGS OF THE INTERNATIONAL CONFERENCE ON ROBOTICS AND AUTOMATION SACRAMENTO, APR. 9 - 11, 1991; [PROCEEDINGS OF THE INTERNATIONAL CONFERENCE ON ROBOTICS AND AUTOMATION], LOS ALAMITOS, IEEE COMP. SOC. PRESS, US, Bd. CONF. 7, 9. April 1991 (1991-04-09), Seiten 1350-1356, XP010023984 ISBN: 978-0-8186-2163-5

EP 2 347 309 B1

**Beschreibung**

Die vorliegende Erfindung betrifft ein Verfahren zur sicheren Erfassung einer kinematischen Größe eines Manipulators sowie eine Vorrichtung zur Durchführung eines solchen Verfahrens.

Bei Manipulatoren muss sichergestellt werden, dass diese keine Personen verletzen. Herkömmlicherweise wird dies mechanisch, insbesondere durch Schutzzäune vor dem Arbeitsbereich des Manipulators und mechanische Endanschläge, die die Bewegungsmöglichkeit des Manipulators begrenzen, oder durch vom Bediener zu betätigenden Zustimmungsschalter gewährleistet. Insbesondere in Hinblick auf eine Kooperation zwischen Mensch und Manipulator oder Manipulatoren untereinander rückt in letzter Zeit jedoch zunehmend eine sogenannte sichere Überwachung in den Fokus, die eine Gefährdung softwaretechnisch ausschließt, indem beispielsweise bei Verletzen eines virtuellen Schutzzaunes oder dem Überfahren eines virtuellen Endanschlages der Manipulator stillgesetzt oder eine andere Fehlerstrategie durchgeführt wird. Voraussetzung hierfür ist die sichere bzw. zuverlässige Erfassung kinematischer Größen, insbesondere einer Position.

Zur sicheren Positionserfassung ist es daher bekannt, Gelenkstellungen durch je zwei Positionsgeber redundant zu erfassen und auszuwerten. Übersteigt die Differenz der beiden Geberwerte eines Gelenks einen vorgegebenen Toleranzbereich, wird ein Fehler bei der Positionserfassung festgestellt.

Neben dem erhöhten infrastrukturellen und steuerungstechnischen Aufwand einer solchen redundanten Erfassung können nachteilig auch bestimmte systematische Fehler, die in beiden Positionsgebern gleichsinnig auftreten, nicht zuverlässig erkannt werden, da sie sich bei der Differenzbildung gegenseitig eliminieren.

Die EP 1 955 830 A1 offenbart ein System zur Diagnose eines Industrieroboters. Dabei werden mindestens zwei Signale des Industrieroboters ausgewertet. Signale können analog, digital oder binär sein. Über eine Auswerteeinheit (condition analyzer) wird das Signal in zwei Stufen ausgewertet und dabei Zustände des Industrieroboters analysiert. In einer ersten Stufe (pre-processing unit) wird das Signal vorverarbeitet und Zielparameter (condition parameters) bestimmt, z.B. durch Bildung von Spitze-zu-Spitze- oder Kurtosiswerten und/oder komplexeren Methoden, wie durch boolesche Netzwerke oder Hauptkomponentenanalyse. In einer zweiten Stufe (monitoring unit) werden die Zustände des Industrieroboters überwacht.

Die EP 1 600 833 A2 offenbart ein System zur Verbesserung der Sicherheit einer Maschine, insb. eines Roboters. Dabei wird der aktuell gefahrene Pfad mit einem Referenzpfad verglichen und Abweichungen detektiert. Überschreiten die Abweichungen bestimmter Parameter des aktuellen Pfads, z.B. die Position, die entsprechenden Parameter des Referenzpfades, erfolgt eine Notfallreaktion, z.B. Stillsetzen des Roboters.

Die EP 1 445 075 A2 offenbart ein System zur Überwachung der Funktionsfähigkeit einer Maschine mit beweglichen Teilen, insb. eines Industrieroboters. Dabei werden Messwerte mindestens zweier unterschiedlicher Messgrößen erfasst und mindestens eine Messgröße so umgerechnet, dass die dadurch entstehende Größe mit einer anderen Messgröße verglichen werden kann.

Die US 2004/0215370 A1 offenbart ein System zur Steuerung einer Linearachse. Die Linearachse ist mit einem Kraftsensor ausgestattet. Über ein Servokontrollmodul werden Position, Geschwindigkeit, und/oder Ausgangsleistung kontrolliert. Das Servokontrollmodul ist an ein Netzwerk angeschlossen und kann somit Information zu den Parametern Position, Geschwindigkeit, und/oder Ausgangsleistung über das Netzwerk austauschen.

Aufgabe der vorliegenden Erfindung ist es daher, eine Erfassung einer kinematischen Größe eines Manipulators zu verbessern.

Diese Aufgabe wird durch ein Verfahren mit den Merkmalen des Anspruchs 1 bzw. eine Vorrichtung mit den Merkmalen des Anspruchs 10 gelöst. Die Unteransprüche betreffen vorteilhafte Weiterbildungen.

Der vorliegenden Erfindung liegt zunächst die Erkenntnis zugrunde, dass die Dynamik eines realen Manipulators, insbesondere seine Stellung, seine Antriebskräfte und - momente und dergleichen, physikalisch die Veränderungen von Positionen begrenzt, die bei seinem Betrieb auftreten können.

So können insbesondere die von den Antriebsmotoren eines Manipulators aufgeprägten Antriebskräfte und -momente physikalisch nur mit endlichen Änderungsraten variiert werden, die unter anderem durch das Ansprechverhalten der Motoren und Motorsteuerungen limitiert sind. Damit kann sich auch die Beschleunigung des Manipulators, die wesentlich von diesen Antriebskräften und - momenten abhängt, nur mit einem begrenzten Ruck ändern, wobei als Ruck vorliegend in fachüblicher Weise die Änderung der Beschleunigung mit der Zeit bezeichnet wird.

In ähnlicher Weise limitieren die in einer bestimmten Stellung auf einen Manipulator wirkenden Antriebs-, Trägheits-, Zentrifugal-, Gewichts-, Reibungskräfte und dergleichen das Beschleunigungsvermögen des Roboters in dieser Stellung. So kann beispielsweise ein horizontal ausgestreckter Arm eines Knickarmroboters aufgrund der unterstützenden Schwerkraft stärker nach unten beschleunigt werden als ein vertikal nach unten hängender Arm, der gegen die Schwerkraft beschleunigt werden muss.

Unter Umsetzung dieser Erkenntnis wird daher im Wesentlichen vorgeschlagen, zu prüfen, ob eine zeitliche Änderung physikalisch plausibel ist, um die Zuverlässigkeit einer erfassten kinematischen Größe zu beurteilen. Dabei hat sich herausgestellt, dass Fehler in einer erfassten kinematischen Größe, beispielsweise einer Position, in Zeitableitungen dieser Größe, insbesondere höheren Zeitableitungen wie beispielsweise der Beschleunigung und insbesondere dem Ruck, signifikanter zutage treten und andererseits besonders gut auf physikalische Plausibilität überprüfbar sind, da physikalische Gesetzmäßigkeiten, beispielsweise Impuls- und Drallsatz oder Induktion, auf Zeitableitungen basieren.

Daher wird in einem erfindungsgemäßen Verfahren zur sicheren Erfassung einer kinematischen Größe eines Manipulators, insbesondere eines Roboters, zunächst eine kinematische Größe des Manipulators zu verschiedenen Zeitpunkten erfasst.

Die kinematische Größe, die erfasst wird, kann insbesondere eine Position oder Positionsdifferenz des Manipulators sein. Dabei wird gleichermaßen eine Lage und/oder Orientierung eines oder mehrerer Manipulatorglieder, beispielsweise eine durch kartesische Koordinaten definierte Lage und eine durch Euler- oder Kardanwinkel definierte Orientierung eines Hand- oder Werkzeugkoordinatensystems, insbesondere des Tool Center Points (TCP), aber auch die Stellung einer oder mehrerer Gelenke des Manipulators, beispielsweise die Winkellagen von Drehgelenken eines Knickarmroboters oder die Hübe von Schubgelenken eines Portalroboters, verallgemeinert als eine Position des Manipulators bezeichnet. Eine solche Position kann entsprechend beispielsweise durch einen oder mehrere Resolver, Potentiometergeber, Inkrementalgeber, Absolutwertgeber und/oder Codierer bzw. Encoder erfasst werden. Wie hieraus hervorgeht, kann eine kinematische Größe im Sinne der vorliegenden Erfindung gleichermaßen eine absolute oder relative Position oder eine, insbesondere inkrementale, Positionsdifferenz umfassen.

Zusätzlich oder alternativ kann die kinematische Größe, die erfasst wird, eine Geschwindigkeit oder Geschwindigkeitsdifferenz des Manipulators umfassen, insbesondere eine kartesische Geschwindigkeit eines oder mehrerer Manipulatorglieder, oder die Geschwindigkeit in einem oder mehreren Gelenken, die beispielsweise von einem oder mehreren Encodern oder Tachogeneratoren erfasst werden kann. Weiter zusätzlich oder alternativ kann die kinematische Größe, die erfasst wird, auch eine Beschleunigung oder Beschleunigungsdifferenz des Manipulators umfassen. Durch ein- bzw. zweifache Integration dieser kinematischen Größe kann in einer bevorzugten Ausführung wiederum die Position des Manipulators bestimmt werden. Beispielsweise kann für eine Proportional-Differential-Regelung eines Manipulators die erfasste kinematischen Größe sowohl eine Position als auch eine Geschwindigkeit des Manipulators, insbesondere seinen Zustandsvektor, umfassen.

Unter einer Erfassung zu verschiedenen Zeitpunkten wird insbesondere eine diskrete Abtastung, aber auch eine kontinuierliche oder quasi-kontinuierliche Erfassung verstanden.

Anschließend wird eine zeitliche Änderung der erfassten kinematischen Größe bestimmt. Als zeitliche Änderung wird insbesondere eine zeitliche Ableitung der erfassten kinematischen Größe bezeichnet, welche vorzugsweise numerisch ermittelt wird. Umfasst die erfasste kinematische Größe beispielsweise eine Beschleunigung des Manipulators, so kann die zeitliche Änderung einen Ruck, i.e. die dritte Ableitung einer Position des Manipulators nach der Zeit bzw. die Änderung der Beschleunigung mit der Zeit umfassen. Umfasst die erfasste kinematische Größe eine Geschwindigkeit des Manipulators, so kann die zeitliche Änderung einen Ruck und/oder eine Beschleunigung, i.e. die zweite Ableitung einer Position des Manipulators nach der Zeit bzw. die Änderung der Geschwindigkeit mit der Zeit umfassen. Umfasst die erfasste kinematische Größe eine Position des Manipulators, so kann die zeitliche Änderung einen Ruck, eine Beschleunigung und/oder eine Geschwindigkeit, i.e. die erste Ableitung der Position des Manipulators nach der Zeit bzw. die Änderung der Position mit der Zeit umfassen. Eine zeitliche Änderung im Sinne der vorliegenden Erfindung kann auch eine vierte oder höhere zeitliche Ableitung umfassen.

Die zeitliche Änderung kann insbesondere durch Bildung eines Differenzenquotienten bestimmt werden. Gleichermaßen kann eine zeitliche Ableitung der erfassten kinematischen Größe beispielsweise auch durch eine Ableitung einer Interpolationsfunktion, zum Beispiel eines höhergradigen Interpolationspolynoms bestimmt werden. Daneben sind weitere Verfahren zur Bestimmung der zeitliche Änderung der erfassten kinematischen Größe denkbar, wie sie beispielsweise aus der Numerik, der diskreten Fourier-Analyse oder dergleichen bekannt sind.

Nun wird geprüft, ob die zeitlichen Änderung in einem vorgegebenen Bereich liegt, der physikalisch plausibel ist. Auf Basis dieser Prüfung kann dann eine Plausibilität der erfassten kinematischen Größe bestimmt werden.

In einer bevorzugten Ausführung wird der plausible Bereich auf Basis der Dynamik des Manipulators fest oder veränderlich vorgegeben. Die Dynamik kann dabei insbesondere durch ein mechanisches Ersatzmodell des Manipulators beschrieben sein, das eine Position, eine Geschwindigkeit und/oder Antriebskräfte und -momente auf plausible Bereiche abbildet.

Umfasst beispielsweise die zeitliche Änderung der erfassten kinematischen Größe eine Beschleunigung des Manipulators, so wird diese nach Impuls- und Drallsatz von den auf den Manipulator wirkenden Kräften und Momenten bestimmt. So kann bei demselben Knickarmroboter bei horizontal ausgestrecktem Arm bei gleichem Motormoment nur eine geringere Beschleunigung nach oben erzielt werden, da ein Teil des Motormoments zur Kompensation der Gewichtskraft des Armes dient, während bei vertikal herabhängendem Arm oder stärkerem Antriebsmotor eine größere Beschleunigung nach oben erreichbar ist. Die Beschleunigung, die in einer gegebenen Stellung und Motorisierung eines Manipulators plausibel ist, hängt also sowohl von der Stellung als auch dem Antriebsmoment und mithin von der Dynamik des Manipulators ab. Da umgekehrt, wie vorstehend beschrieben, derselbe Knickarmroboter aufgrund der dann unterstützenden Wirkung der Gewichtskraft bei horizontal ausgestrecktem Arm stärker nach unten beschleunigen kann als bei vertikal herabhängendem Arm, wird deutlich, dass ein plausibler Bereich nicht notwendig symmetrisch zum Wert Null liegen muss. Vielmehr kann beispielsweise eine größere Beschleunigung in die eine Richtung und eine geringere Beschleunigung in die andere Richtung plausibel sein. Gleichermaßen ist es möglich, dass ein plausibler Bereich eine Mindest- oder Untergrenze umfasst. So stellt sich beispielsweise in bestimmten Manipulatorzuständen selbst unter Aufprägung maximaler Antriebskräften bzw. -momente eine Mindestgeschwindigkeit ein, da ein sich bewegender Manipulator physikalisch nicht ohne Verzögerung abgebremst werden kann. Insbesondere aus einem entsprechenden mechanischen Ersatzmodell des Manipulators können sich solche unsymmetrischen und/oder zeitlich veränderlichen Plausibilitätsbereiche ergeben.

Diejenige Änderung der Beschleunigung mit der Zeit, die sich aus fehlerhaft erfassten Positions- oder Geschwindigkeitsdaten ergibt, übersteigt den physikalisch maximal realisierbaren Ruck in weiten Betriebsbereichen besonders deutlich. Umfasst daher die zeitliche Änderung der erfassten kinematischen Größe einen Ruck des Manipulators, so kann in einer bevorzugten Ausführung der plausible Bereich für diese zeitliche Änderung konstant gewählt werden, indem Grenzwerte vorgegeben werden, die einerseits ausreichend über einem physikalisch maximal realisierbaren Ruck liegen und insbesondere ein gewisses Messrauschen berücksichtigen, und auf der anderen Seite dennoch ausreichen deutlich unter Beschleunigungsänderungen liegen, die aus Fehlern bei der Erfassung der Position oder Geschwindigkeit resultieren.

Zusätzlich oder alternativ kann der plausible Bereich fest oder veränderlich auf Basis von Sensoren vorgegeben werden, die tatsächliche, physikalische zeitliche Änderungen des Manipulators erfassen. Erfasst beispielsweise ein Sensor an einem Manipulatorglied dessen, vorzugsweise abtriebsseitige, Geschwindigkeit oder Beschleunigung, so kann diese der Bestimmung eines plausiblen Bereichs zugrundegelegt werden, Hierzu kann beispielsweise entschieden werden, dass eine erfasste kinematischen Größe plausibel ist, wenn eine zeitliche Ableitung dieser erfasste Größe sich, vorzugsweise betragsmäßig, nicht um mehr als einen vorgegebenen Grenzwert von der erfassten zeitlichen Ableitung dieser Größe unterscheidet.

Dann und vorzugsweise nur dann, wenn die Prüfung ergibt, dass die erfasste kinematische Größe plausibel ist, i.e. falls die zeitlichen Änderung in dem plausiblen Bereich liegt, wird eine als sicher bzw. zuverlässig klassifizierte kinematische Größe auf Basis der erfassten kinematischen Größe ausgegeben. Diese sichere kinematische Größe kann vorzugsweise die erfasste kinematische Größe selber, eine zeitliche Ableitung dieser erfassten kinematischen Größe und/oder ein zeitliches Integral der erfassten kinematischen Größe umfassen.

Wurden beispielsweise die Beschleunigungen und Rucke in den Gelenken eines Manipulators als zeitliche Änderungen von erfassten Gelenkstellungen bestimmt und festgestellt, dass diese Beschleunigungen und Rucke unter Berücksichtigung der Dynamik des Manipulators physikalisch plausibel sind, können die erfassten Gelenkstellungen und/oder die hieraus bestimmten Gelenkgeschwindigkeiten als sichere kinematische Größe ausgegeben werden. Entsprechend kann bei Erfassung von Geschwindigkeiten und Prüfung von Beschleunigung und Ruck auf Plausibilität die erfasste Geschwindigkeit und die sich hieraus durch Integration ergebende Position als sichere kinematische Größe ausgegeben werden.

Eine sichere kinematische Größe im Sinne der vorliegenden Erfindung kann insbesondere eine im Sinne einer geltenden Norm, etwa der EN775 oder ISO 10218, oder im Sinne der Personen- oder Anlagensicherheit als sicher eingestufte kinematische Größe sein.

Im Gegensatz zu bekannten Geschwindigkeits- und Beschleunigungsüberwachungen, die grundsätzlich davon ausgehen, dass die erfassten kinematischen Größen als solche zuverlässig sind, und daher hierauf aufbauend eine Überschreitung zulässiger Bahngeschwindigkeiten oder auch eine Kollision feststellen, wird also erfindungsgemäß vorgeschlagen, zunächst die Plausibilität von zeitlichen Änderungen der erfassten kinematischen Größen zu prüfen, da zeitliche Änderungen, beispielsweise Beschleunigungen und Rucke, durch die Dynamik eines Manipulators limitiert sind, und eine kinematische Größe auf Basis der erfassten kinematischen Größe vorzugsweise nur dann als sicher auszugeben, falls Plausibilität vorliegt. Dabei macht sich die Erfindung die Erkenntnis zunutze, dass gerade in höheren Ableitungen Fehler in erfassten kinematischen Größen häufig signifikanter sind. So führen beispielsweise Abweichungen in den Positionswerten eines ruhenden Manipulators, die auf Positionsebene kaum erkennbar sind, zu physikalisch unplausiblen, da nicht realisierbaren Beschleunigungssprüngen und können so leicht als fehlerhaft erfasste Positionswerte erkannt werden.

In einer bevorzugten Ausführung wird eine Meldung ausgegeben, falls die zeitliche Änderung für einen oder mehrere Zeitpunkte außerhalb des plausiblen Bereichs liegt. Diese Meldung kann beispielsweise als Fehlermeldung in einer Manipulatorsteuerung dazu führen, dass der Manipulator stillgesetzt oder mit größeren Sicherheitsreserven betrieben wird, da die kinematischen Größen, auf denen seine Steuerung basiert, nicht zuverlässig sind. Die Meldung kann vorteilhaft die Plausibilität der zeitlichen Änderung und damit der erfassten kinematischen Größe quantifizieren, indem sie beispielsweise einen Abstand der zeitlichen Änderung von dem plausiblen Bereich angibt, so dass ein größerer Meldungswert einen größeren Abstand und somit eine geringere Plausibilität anzeigt. Insbesondere auf diese Weise kann vorteilhaft angepasst auf die nicht sichere Erfassung reagiert werden, indem beispielsweise bei höheren Plausibilitätsgraden die Manipulatorsteuerung den Betrieb, gegebenenfalls mit Einschränkungen, fortsetzt, bei niedrigeren Plausibilitätsgraden hingegen den Manipulator stillsetzt.

Vorteilhaft werden die sicheren kinematischen Größen erst dann nicht mehr ausgegeben und/oder die Meldung erst dann ausgegeben, wenn die zeitliche Änderung für mehrere Zeitpunkte bzw. während eines vorgegebenen Zeitraums außerhalb des plausiblen Bereichs liegt. Durch die Berücksichtigung mehrerer Zeitpunkte kann insbesondere ein einmaliger oder kurzzeitiger Ausreißer bei der Erfassung der kinematischen Größe akzeptiert werden. Da eine Manipulatorsteuerung häufig ihrerseits eine gewisse Trägheit aufweist und somit vereinzelte fehlerhafte kinematische Größen noch nicht zu einer nicht mehr akzeptablen Reaktion der Manipulatorsteuerung führen müssen, kann so auch bei Störungen in der Erfassung, die sich auf den Betrieb nicht auswirken, ein Betrieb des Manipulators fortgesetzt werden. Für eine kompaktere Darstellung wird vorliegend auch eine Regelung, i.e. eine Ausgabe von Steuerbefehlen auf Basis des Vergleichs von vorgegebenen Soll- und rückgeführten Ist-Werten, verallgemeinert als Steuerung bezeichnet.

Zusätzlich oder alternativ zur Prüfung, ob die zeitlichen Änderungen einer erfassten kinematischen Größe in einem plausiblen Bereich liegen, wird in einer bevorzugten Ausführung geprüft, ob die erfasste kinematische Größe selber in einem plausiblen Bereich liegt, der auf Basis wenigstens einer zeitlich vorangegangenen, vorzugsweise sicheren, kinematischen Größe und einer plausiblen zeitlichen Änderung dieser kinematischen Größe vorgegeben wird. Dann und vorzugsweise nur dann, wenn die zeitliche Änderung und/oder die erfasste kinematische Größe selber in dem jeweiligen plausiblen Bereich liegen, wird eine sichere kinematische Größe, die vorzugsweise die erfasste kinematische Größe selber umfasst, ausgegeben. Ist beispielsweise eine frühere Position als sicher ausgegeben, kann aus dieser Position und ihrer plausiblen zeitlichen Änderung, i.e. Geschwindigkeit, ein plausibler Bereich vorgegeben werden, in dem eine spätere erfasste Position liegen muss. Nur wenn die später erfasste Position dann in diesem plausiblen Bereich liegt, wird diese später erfasste Position als sichere kinematische Größe ausgegeben. Gleiches gilt analog beispielsweise für die Geschwindigkeit oder die Beschleunigung. So muss eine später erfasste Beschleunigung physikalisch in einem Bereich liegen, der sich aus einer früheren Beschleunigung und einem physikalisch plausiblen Ruck ergibt.

Weitere Vorteile und Merkmale ergeben sich aus den Unteransprüchen und den Ausführungsbeispielen. Hierzu zeigt, teilweise schematisiert:

Fig. 1:  einen Roboter mit seinen Bewegungsachsen;
Fig. 2:  den zeitlichen Verlauf kinematischer Größen des Roboters aus Fig. 1;
Fig. 3:  den Ablauf eines Verfahrens nach einer Ausführung der vorliegenden Erfindung; und
Fig. 4:  den zeitlichen Verlauf nach Fig. 2 bei größerem Erfassungsfehler.

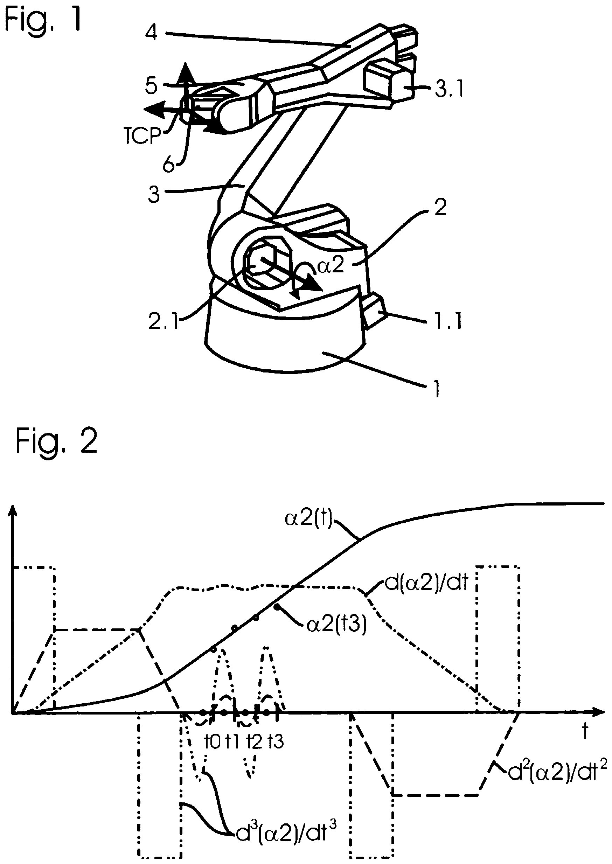

Fig. 1 zeigt einen sechsachsigen Knickarmroboter mit einem Grundgestell 1. Ein Karussell 2 ist drehbar an dem Grundgestell gelagert und durch einen Antriebsmotor 1.1 um eine Vertikalachse drehbar. An dem Karussell 2 ist eine Schwinge 3 drehbar befestigt, die durch einen Antriebsmotor 2.1 um eine erste Horizontalachse drehbar ist. An ihr ist wiederum ein Arm 4 drehbar befestigt, welcher durch einen weiteren Antriebsmotor 3.1 um eine parallele zweite Horizontalachse gedreht werden kann. Eine Hand 5 ist drehbar an dem Arm 4 befestigt und kann durch einen Antriebsmotor um eine zu den Horizontalachsen senkrechte Achse gedreht werden. Zusätzlich gestattet die Hand 5 die Drehung einer Werkzeugaufnahme 6, in der ein Werkzeugreferenzkoordinatensystem TCP definiert ist, um eine sechste Achse.

Die Winkellagen $\alpha i (i=1,2,...6)$ der sechs Achsen werden über je einen Resolver oder Encoder als kinematischen Größen des Manipulators zu verschiedenen Zeitpunkten erfasst und einer Differenziervorrichtung zugeführt, in der zeitliche Änderungen $d\alpha i/dt$, $d^2\alpha i/dt^2$ und $d^3\alpha i/dt^3$ numerisch bestimmt und an eine Prüf- und Beurteilungsvorrichtung weitergeleitet werden, die prüft, ob diese zeitlichen Änderung in einem vorgegebenen plausiblen Bereich [-aizul, aizul], [-rizul, rizul] liegen und auf Basis dieser Prüfung die Plausibilität der erfassten kinematischen Größe bestimmt. Differenzier-, Prüf- und Beurteilungsvorrichtung können beispielsweise soft- oder hardwaretechnisch in einer Robotersteuerung implementiert sein, die am Roboter oder in einem externen Steuerschrank angeordnet sein kann.

In Fig. 2 ist exemplarisch ein Verlauf der Winkellage $\alpha 2$ und ihrer ersten, zweiten und dritten Ableitung beim Abfahren eines üblichen Geschwindigkeitstrapezprofils dargestellt.

Insbesondere aufgrund von Induktivitäten und Trägheiten des Antriebsmotors 2.1 und seiner Motorsteuerung kann dabei der bei einem theoretischen Geschwindigkeitstrapezprofil erforderliche rechteckförmige Beschleunigungsverlauf nicht realisiert werden. Vielmehr kann vereinfachend angenommen werden, dass im Antriebsmotors 2.1 zunächst mit zeitlich annähernd linearem Verlauf ein Drehmoment aufgebaut, anschließend für eine vorgegebene Zeit konstant gehalten, und anschließend, wiederum mit zeitlich linearem Verlauf, wieder auf Null reduziert wird. Im weiteren Verlauf wird dann ein gegensinniges, gleich großes Bremsmoment mit zeitlich linearem Verlauf aufgebaut, für eine vorgegebene Zeit konstant gehalten und anschließend mit zeitlich linearem Verlauf auf Null reduziert.

Dies führt zu der in Fig. 2 strichliert dargestellten Beschleunigung $d^2\alpha 2/dt^2$ im Gelenk zwischen Karussell 2 und Schwinge 3, die mit massenbedingter Trägheit im Wesentlichen dem Momentenverlauf folgt, so dass sich näherungsweise eine Beschleunigung mit zwei entgegengesetzt gerichteten Trapezbereichen ergibt. Integration führt zu dem strichpunktiert dargestellten Geschwindigkeitsverlauf $d\alpha 2/dt$, nochmalige Integration schließlich zu dem ausgezogen dargestellten Verlauf der Winkellage $\alpha 2(t)$ über der Zeit t.

Strich-doppelpunktiert ist in Fig. 2 näherungsweise auch der Verlauf des Rucks, i.e. der dritten Ableitung $d^3\alpha 2/dt^3$ der Winkellage $\alpha 2(t)$ eingezeichnet. Man erkennt zu Beginn das im Wesentlichen konstante Anwachsen der Beschleunigung, gefolgt von einem Abschnitt mit konstanter Beschleunigung, in der ihre Ableitung $d^3\alpha 2/dt^3$ gleich Null ist, bevor die Beschleunigung mit einem im Wesentlichen konstanten, negativen Ruck wieder auf Null zurückgeht. Beim Bremsstrapez treten die Rucke entsprechend umgekehrt auf.

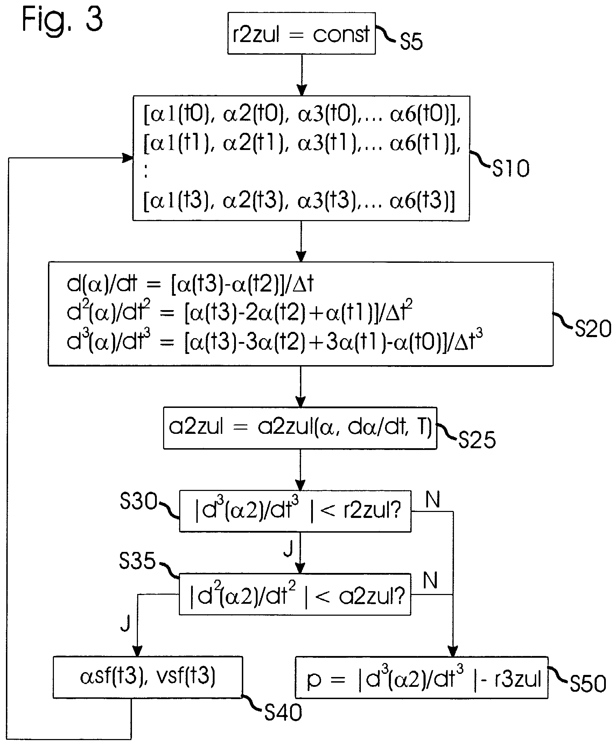

Wie insbesondere in Fig. 2 ersichtlich, können bei einem realen Roboter, wie er in Fig. 1 dargestellt ist, keine beliebigen Rucke und Beschleunigungen auftreten, diese sind vielmehr durch die Antriebsmomente und die Dynamik des Roboters zu jedem Zeitpunkt physikalisch begrenzt. Dies wird bei dem nachfolgend anhand Fig. 3 beschriebenen Verfahren genutzt, um zu prüfen, ob eine kinematische Größe zuverlässig erfasst worden ist. Exemplarisch stellt Fig. 3 dabei das Verfahren für die vorstehend beschriebene Winkellage $\alpha 2$ im Gelenk zwischen Karussell 2 und Schwinge 3 dar, ist jedoch ohne Beschränkung der Allgemeinheit auch auf die anderen Achsen übertragbar.

Zunächst wird in einem Schritt S5, der einmalig vorab ausgeführt wird, ein plausibler Ruckbereich [-r2zul, r2zul] vorgegeben. Wie sich überraschenderweise gezeigt hat, kann für den maximalen Ruck, der mit heutigen Manipulatoren realisierbar ist, über weite Bereiche in ausreichender Näherung ein konstanter Grenzwert r2zul vorgegeben werden.

Anschließend werden in einem Schritt S10 fortlaufend die Winkellagen $\alpha$ der sechs Gelenke in konstanten Zeitintervallen $\Delta t$ erfasst, beispielsweise mit $\Delta t = 2,5$ ms, i.e. einer Abtastrate von 400 Hz. Wenigstens die letzten vier Werte werden gespeichert, wobei $\alpha i(t3)$ einem zuletzt erfassten Wert entspricht, $\alpha i(t2)$ einem davor erfassten Wert etc..

Nun werden in einem Schritt S20 diese Winkelverläufe $\alpha(t)$ mehrfach numerisch differenziert, wobei sich in einer besonders einfachen Form für die erste, zweit bzw. dritte Ableitung ergibt:

$$\frac{d\alpha}{dt} \quad = \quad \frac{a(t3) - a(t2)}{\Delta t}$$

$$\frac{d^2\alpha}{dt^2} \quad = \quad \frac{a(t3) - 2 \cdot a(t2) + a(t1)}{\Delta t^2}$$

$$\frac{d^3\alpha}{dt^3} \quad = \quad \frac{a(t3) - 3 \cdot a(t2) + 3 \cdot a(t1) - a(t0)}{\Delta t^3}$$

Aus der, gegebenenfalls vereinfachten, Bewegungsgleichung für den Roboter wird in einem Schritt S25 in Abhängigkeit von den maximalen Motormomenten [T1, T2,...T6] = T der sechs Antriebsmotoren, seiner durch seine Gelenkstellungen $\alpha$ beschriebenen Position und Geschwindigkeit die maximal mögliche Beschleunigung in der zweiten Achse:

$$a2zul = \left\| \begin{bmatrix} 0 & 1 & 0 & ...0 \end{bmatrix} \cdot M^{-1} \left( T - h\left( \alpha, \frac{d\alpha}{dt} \right) \right) \right\|$$

berechnet, wobei $M^{-1}$ die inverse Massenmatrix und $h(\alpha, d\alpha/dt)$ den verallgemeinerten Vektor der äußeren Kräfte bezeichnet.

Nun wird in den Schritten S30, S35 geprüft, ob der in Schritt S20 berechnete Ruck $d^3\alpha 2/dt^3$ und die in Schritt S20 berechnete Beschleunigung $d^2\alpha 2/dt^2$ jeweils in einem plausiblen Bereich liegen, i.e. betragsmäßig kleiner sind als die in Schritt S5 bzw. S25 vorgegebenen Grenzwerte r2zul, a2zul.

Ist dies jeweils der Fall (S30: "J" und S35: "J"), sind die erfassten Winkellagen $\alpha 2(t0),... \alpha 2(t3)$ plausibel, da ihr zeitlicher Verlauf mit dem Roboter realisierbar ist. In diesem Fall wird der in Schritt S10 erfasste Winkelverlauf $\alpha 2(t)$ und der in Schritt S20 ermittelte Geschwindigkeitsverlauf $d\alpha 2/dt$ als sichere kinematische Größe $(\alpha sf(t), vsf(t)) = (\alpha 2(t), d\alpha 2/dt)$ ausgegeben.

Liegt hingegen der in Schritt S20 ermittelte Ruck oder die in Schritt S20 ermittelte Beschleunigung nicht in dem plausiblen Bereich [-r2zul, r2zul] bzw. [-a2zul, a2zul] (S30: "N" oder S35: "N"), so kann diese zeitliche Änderung der erfassten Winkellagen $\alpha 2(t0),... \alpha 2(t3)$ mit dem Roboter physikalisch nicht realisiert werden und ist somit nicht plausibel. Somit kann davon ausgegangen werden, dass die Winkellagen $\alpha 2$ fehlerhaft erfasst wurde.

Daher wird in einer bevorzugten Weiterbildung in einem Schritt S50 eine Meldung p generiert, deren Wert dem Abstand des Ruckes zum Plausibilitätsbereich entspricht und somit ein Maß für die Plausibilität darstellt, i.e. größere Werte von p entsprechend geringerer Plausibilität. Auf diese Fehlermeldung kann variabel reagiert werden. Beispielsweise kann bei noch relativ hoher Plausibilität, i.e. einem geringen Wert für p, der Roboter mit verringerter Geschwindigkeit weiterbetrieben werden, während er bei niedrigerer Plausibilität, i.e. einem höheren Wert für p sofort stillgesetzt wird.

In einer Abwandlung können beispielsweise die Schritte S25 und S35 entfallen, so dass nur geprüft wird, ob die in Schritt S20 numerisch ermittelte dritte Ableitung $d^3\alpha2/dt^3$ der Position $\alpha2$ betragsmäßig einen vorgegebenen Wert übersteigt.

In Fig. 2 sind in einem mittleren Bereich in vergrößerter Darstellung vier Abtastzeitpunkte t3 > t2 > t1 > t0 sowie, durch Kreise angedeutet, die dabei erfassten Positionswerte $\alpha2(t)$ eingezeichnet sind. Erkennbar weichen die erfassten Positionen $\alpha2(t)$ geringfügig von dem tatsächlichen Verlauf ab, die Kreise liegen über bzw. unter der Kurve $\alpha2(t)$. Durch diese im Beispiel periodischen Abweichungen ergibt sich in diesem Bereich eine ebenfalls periodisch wechselnde Geschwindigkeit $d\alpha2/dt$ und in der Folge eine entsprechend schwankende Beschleunigung $d^2\alpha2/dt^2$ (strichliert) bzw. ein entsprechend schwankender Ruck $d^3\alpha2/dt^3$ (strich-doppelpunktiert). Da die Fehler in der Positionserfassung jedoch sehr gering sind, ist auch der Ruck deutlich kleiner als der physikalisch maximal realisierbare Ruck, der beim Hochbeschleunigen des Antriebsmotors 2.1 erreicht wird. Somit werden die erfassten Werte $\alpha2(t0),...\alpha2(t3)$ aufgrund des plausiblen Rucks als sichere Positionen ausgegeben.

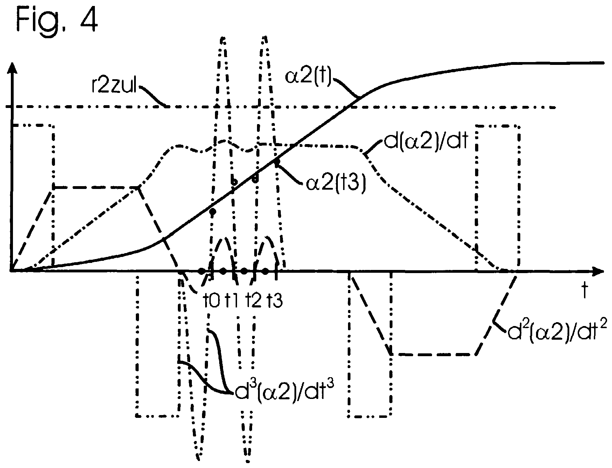

In Fig. 4 ist prinzipiell dasselbe Szenario dargestellt, allerdings weichen hier die erfassten Positionen $\alpha2(t0),...\alpha2(t3)$ geringfügig stärker von den realen Werten ab, erkennbar durch die geringfügig größere Abweichung der Kreise von der ausgezogenen Kurve. Während die Geschwindigkeit und die Beschleunigung, die sich bei der numerischen Differentiation dieser Werte ergibt, erkennbar noch in einem physikalisch plausiblen Bereich liegt, der bei der dargestellten Bahn auch in anderen Abschnitten realisiert wird, übersteigt der Ruck die physikalisch mögliche Beschleunigungsänderung r2zul bereits deutlich. Somit kann auch in der Abwandlung in Schritt S30 die geringfügig stärkere Abweichung der erfassten von der realen Position bereits zuverlässig detektiert und auf diese Weise verhindert werden, dass diese Werte als sichere Positionsdaten einer Steuerung zugrundegelegt werden.

Bezugszeichenliste

| | |
|---|---|
| 1 | Grundgestellt |
| 1.1 | Antriebsmotor |
| 2 | Karussell |
| 2.1 | Antriebsmotor |
| 3 | Schwinge |
| 3.1 | Antriebsmotor |
| 4 | Arm |
| 5 | Hand |
| 6 | Werkzeugaufnahme |
| $\alpha2$ | Drehwinkel Schwinge gegenüber Karussell |
| $d^n\square/dt^n$-te | Ableitung nach der Zeit t |

Patentansprüche

1. Verfahren zur sicheren Erfassung einer kinematischen Größe eines Manipulators, insbesondere eines Roboters, mit den Schritten:

   (S10): Erfassen einer kinematischen Größe (ai) des Manipulators zu verschiedenen Zeitpunkten (t0, t1, t2, t3) durch eine Erfassungsvorrichtung;
   (S20): Bestimmen einer zeitlichen Änderung ($dai/dt$, $d^2\alpha i/dt^2$, $d^3\alpha i/dt^3$) der erfassten kinematischen Größe;
   (S30, S35): Prüfen, ob die zeitliche Änderung in einem vorgegebenen plausiblen Bereich ([-aizul, aizul], [-rizul, rizul]) liegt; und
   (S40): Ausgeben einer sicheren kinematischen Größe (asf, vsf) auf Basis der erfassten kinematischen Größe, falls die zeitliche Änderung in dem plausiblen Bereich liegt, wobei

   die sichere kinematische Größe, die erfasste kinematische Größe, eine zeitliche Ableitung der erfassten kinematischen Größe und/oder ein zeitliches Integral der erfassten kinematischen Größe umfasst.

2. Verfahren nach Anspruch 1, gekennzeichnet durch den Schritt:
   (S50): Ausgeben einer Meldung (p), falls die zeitliche Änderung außerhalb des plausiblen Bereichs liegt.

3. Verfahren nach Anspruch 2, **dadurch gekennzeichnet, dass** die Meldung (p) nur ausgegeben wird, falls die zeitliche Änderung für wenigstens eine vorgegebene Anzahl von Zeitpunkten außerhalb des plausiblen Bereichs liegt.

4. Verfahren nach einem der vorhergehenden Ansprüche 2 bis 3, **dadurch gekennzeichnet, dass** die Meldung (p), die ausgegeben wird, falls die zeitliche Änderung außerhalb des plausiblen Bereichs liegt, von einem Abstand ($|d^3\alpha i/dt^3|$ - rizul) der zeitlichen Änderung von dem plausiblen Bereich abhängt.

5. Verfahren nach einem der vorhergehenden Ansprüche, **dadurch gekennzeichnet, dass** der plausible Bereich ([-aizul, aizul]) auf Basis der Dynamik des Manipulators (S25) und/oder auf Basis wenigstens eines Sensors vorgegeben wird, der eine zeitliche Änderung der erfassten kinematischen Größe erfasst.

6. Verfahren nach einem der vorhergehenden Ansprüche, **dadurch gekennzeichnet, dass** der plausible Bereich ([-rizul, rizul]) konstant ist.

7. Verfahren nach einem der vorhergehenden Ansprüche, **dadurch gekennzeichnet, dass** die erfasste kinematische Größe des Manipulators eine Position ($\alpha i$), eine Geschwindigkeit ($d\alpha i/dt$) und/oder eine Beschleunigung ($d^2\alpha i/dt^2$) des Manipulators umfasst.

8. Verfahren nach einem der vorhergehenden Ansprüche, **dadurch gekennzeichnet, dass** die zeitliche Änderung der erfassten kinematischen Größe, die bestimmt wird, eine zeitliche Ableitung der erfassten kinematischen Größe, insbesondere eine Geschwindigkeit ($dai/dt$), eine Beschleunigung ($d^2\alpha i/dt^2$) und/oder einen Ruck ($d^3\alpha i/dt^3$) des Manipulators umfasst.

9. Verfahren nach einem der vorhergehenden Ansprüche, **dadurch gekennzeichnet, dass** die sichere kinematische Größe auf Basis der erfassten kinematischen Größe ausgegeben wird, falls die zeitliche Änderung in dem plausiblen Bereich liegt und/oder falls die erfasste kinematische Größe selber in einem plausiblen Bereich liegt, der auf Basis wenigstens einer zeitlich vorangegangenen kinematischen Größe und einer zeitlichen Änderung dieser kinematischen Größe vorgegeben ist.

10. Vorrichtung zur sicheren Erfassung einer kinematischen Größe eines Manipulators, insbesondere eines Roboters, mit
einer Erfassungsvorrichtung zum Erfassen einer kinematischen Größe des Manipulators zu verschiedenen Zeitpunkten;
einer Differenziervorrichtung zum Bestimmen einer zeitlichen Änderung der erfassten kinematischen Größe;
einer Prüfvorrichtung zum Prüfen, ob die zeitliche Änderung in einem vorgegebenen plausiblen Bereich liegt; und
einer Beurteilungsvorrichtung zum Bestimmen einer Plausibilität der erfassten kinematischen Größe auf Basis dieser Prüfung,
wobei die Vorrichtung zur Durchführung eines Verfahrens nach einem der vorhergehenden Ansprüche eingerichtet ist.

11. Vorrichtung nach Anspruch 10, **dadurch gekennzeichnet, dass** die Erfassungsvorrichtung einen Resolver, Potentiometergeber, Inkrementalgeber, Absolutwertgeber und/oder Codierer umfasst.

12. Computerprogramm, das ein Verfahren nach einem der Ansprüche 1 bis 9 ausführt, wenn es in einer Vorrichtung nach Anspruch 10 oder 11 abläuft.

13. Datenträger mit Programmcode, der auf einem maschinenlesbaren Träger gespeichert ist und ein Computerprogramm nach Anspruch 12 umfasst.

**Claims**

1. A method for the reliable detection of a kinematic quantity of a manipulator, in particular of a robot, the method comprising the steps of:

(S10): detecting a kinematic quantity ($\alpha i$) of the manipulator at different points in time (t0, t1, t2, t3) by a detection device;
(S20): determining a change over time ($dai/dt$, $d^2\alpha i/dt^2$, $d^3\alpha i/dt^3$) of the detected kinematic quantity;

(S30, S35): checking whether the change over time lies within a predetermined plausible range ([-aizul, aizul], [-rizul, rizul]); and

(S40): outputting a reliable kinematic quantity (asf, vsf) on the basis of the detected kinematic quantity if the change over time lies within the plausible range, wherein

the reliable kinematic quantity comprises the detected kinematic quantity, a time derivative of the detected kinematic quantity and / or an integral of the detected kinematic quantity over time.

2. The method in accordance with claim 1, **characterised by** the step of:
(S50): outputting a message (p) if the change over time lies outside the plausible range.

3. The method in accordance with claim 2, **characterised in that** the message (p) is only output if the change over time lies outside the plausible range for at least a predetermined number of points in time.

4. The method in accordance with any one of the preceding claims 2 to 3, **characterised in that** the message (p) which is output if the change over time lies outside the plausible range depends on a distance ($|d^3\alpha i/dt^3|$ - rizul) of the change over time from the plausible range.

5. The method in accordance with any one of the preceding claims, **characterised in that** the plausible range ([-aizul, aizul]) is predetermined on the basis of the dynamics of the manipulator (S25) and / or on the basis of at least one sensor which detects a change over time of the detected kinematic quantity.

6. The method in accordance with any one of the preceding claims, **characterised in that** the plausible range ([-rizul, rizul]) is constant.

7. The method in accordance with any one of the preceding claims, **characterised in that** the detected kinematic quantity of the manipulator comprises a position ($\alpha i$), a velocity ($d\alpha i/dt$) and / or an acceleration ($d^2\alpha i/dt^2$) of the manipulator.

8. The method in accordance with any one of the preceding claims, **characterised in that** the change over time of the detected kinematic quantity which is being determined comprises a time derivative of the detected kinematic quantity, in particular a velocity ($d\alpha i/dt$), an acceleration ($d^2\alpha i/dt^2$) and / or a jerk ($d^3\alpha i/dt^3$) of the manipulator.

9. The method in accordance with any one of the preceding claims, **characterised in that** the reliable kinematic quantity is output on the basis of the detected kinematic quantity if the change over time lies in the plausible range and / or if the detected kinematic quantity itself lies in a plausible range which is predetermined on the basis of at least one temporally preceding kinematic quantity and a change over time of this kinematic quantity.

10. A device for the reliable detection of a kinematic quantity of a manipulator, in particular of a robot, the device comprising
a detection device for detecting a kinematic quantity of the manipulator at different points in time;
a differentiating device for determining a change over time of the detected kinematic quantity;
a testing device for testing whether the change over time lies within a predetermined plausible range; and
an evaluation device for determining a plausibility of the detected kinematic quantity on the basis of this test, wherein the device is arranged to carry out a method in accordance with any one of the preceding claims.

11. The device in accordance with claim 10, **characterised in that** the detection device comprises a resolver, a potentiometer encoder, an incremental encoder, an absolute encoder and / or an encoder.

12. A computer program which executes a method in accordance with any one of the claims 1 to 9 when it is run on a device in accordance with claim 10 or 11.

13. A data carrier with program code which is stored on a machine-readable medium and which comprises a computer program in accordance with claim 12.

**Revendications**

1. Procédé pour la détection fiable d'une grandeur cinématique d'un manipulateur, en particulier d'un robot, avec les étapes de :

(S10) : détection d'une grandeur cinématique (ai) du manipulateur à différents moments (t0, t1, t2, t3) par un dispositif de détection ;
(S20) : détermination d'une modification temporelle (dai/dt, $d^2\alpha i/dt^2$, $d^3\alpha i/dt^3$) de la grandeur cinématique détectée ;
(S30, S35) : vérification si la modification temporelle se situe dans une plage plausible prédéfinie ([-aizul, aizul], [-rizul, rizul]) ; et
(S40) : émission d'une grandeur cinématique fiable (asf, vsf) sur la base de la grandeur cinématique détectée, si la modification temporelle se situe dans la plage plausible, dans lequel

la grandeur cinématique fiable comprend la grandeur cinématique détectée, une dérivée temporelle de la grandeur cinématique détectée et/ou une intégrale temporelle de la grandeur cinématique détectée.

2. Procédé selon la revendication 1, **caractérisé par** l'étape de :
(S50) : émission d'un message (p), si la modification temporelle se situe en dehors de la plage plausible.

3. Procédé selon la revendication 2, **caractérisé en ce que** le message (p) n'est émis que si la modification temporelle pour au moins un nombre prédéfini de moments se situe en dehors de la plage plausible.

4. Procédé selon l'une quelconque des revendications précédentes 2 à 3, **caractérisé en ce que** le message (p), qui est émis, si la modification temporelle se situe en dehors de la plage plausible, dépend d'une distance ($|d^3\alpha i/dt^3|$ - rizul) de la modification temporelle de la plage plausible.

5. Procédé selon l'une quelconque des revendications précédentes, **caractérisé en ce que** la plage plausible ([-aizul, aizul]) est prédéfinie sur la base de la dynamique du manipulateur (S25) et/ou sur la base d'au moins un capteur, qui détecte une modification temporelle de la grandeur cinématique détectée.

6. Procédé selon l'une quelconque des revendications précédentes, **caractérisé en ce que** la plage plausible ([-rizul, rizul]) est constante.

7. Procédé selon l'une quelconque des revendications précédentes, **caractérisé en ce que** la grandeur cinématique détectée du manipulateur comprend une position ($\alpha i$), une vitesse (dai/dt) et/ou une accélération ($d^2\alpha i/dt^2$) du manipulateur.

8. Procédé selon l'une quelconque des revendications précédentes, **caractérisé en ce que** la modification temporelle de la grandeur cinématique détectée, qui est déterminée, comprend une modification temporelle de la grandeur cinématique détectée, en particulier une vitesse (dai/dt), une accélération ($d^2\alpha i/dt^2$) et/ou une saccade ($d^3\alpha i/dt^3$) du manipulateur.

9. Procédé selon l'une quelconque des revendications précédentes, **caractérisé en ce que** la grandeur cinématique fiable est émise sur la base de la grandeur cinématique détectée, si la modification temporelle se situe dans la plage plausible et/ou si la grandeur cinématique détectée se situe elle-même dans une plage plausible, qui est prédéfinie sur la base d'au moins une grandeur cinématique précédente dans le temps et d'une modification temporelle de cette grandeur cinématique.

10. Dispositif pour la détection fiable d'une grandeur cinématique d'un manipulateur, en particulier d'un robot, avec un dispositif de détection pour la détection d'une grandeur cinématique du manipulateur à différents moments ; un dispositif de différenciation pour la détermination d'une modification temporelle de la grandeur cinématique détectée ; un dispositif de vérification pour la vérification si la modification temporelle se situe dans une plage plausible prédéfinie ; et un dispositif d'évaluation pour la détermination d'une plausibilité de la grandeur cinématique détectée sur la base de cette vérification, dans lequel le dispositif est aménagé pour la réalisation d'un procédé selon l'une quelconque des revendications précédentes.

11. Dispositif selon la revendication 10, **caractérisé en ce que** le dispositif de détection comprend un résolveur, un capteur potentiométrique, un codeur incrémental, un codeur absolu et/ou codeur.

12. Programme informatique, qui effectue un procédé selon l'une quelconque des revendications 1 à 9, lorsqu'il est exécuté dans un dispositif selon la revendication 10 ou 11.

13. Support de données avec code de programme, qui est enregistré sur un support lisible par machine et comprend un programme informatique selon la revendication 12.

Fig. 1

Fig. 2

Fig. 3

$$r2zul = const \quad \text{S5}$$

$$[\alpha 1(t0),\ \alpha 2(t0),\ \alpha 3(t0),...\ \alpha 6(t0)],$$
$$[\alpha 1(t1),\ \alpha 2(t1),\ \alpha 3(t1),...\ \alpha 6(t1)],$$
$$\vdots$$
$$[\alpha 1(t3),\ \alpha 2(t3),\ \alpha 3(t3),...\ \alpha 6(t3)] \quad \text{S10}$$

$$d(\alpha)/dt = [\alpha(t3)-\alpha(t2)]/\Delta t$$
$$d^2(\alpha)/dt^2 = [\alpha(t3)-2\alpha(t2)+\alpha(t1)]/\Delta t^2$$
$$d^3(\alpha)/dt^3 = [\alpha(t3)-3\alpha(t2)+3\alpha(t1)-\alpha(t0)]/\Delta t^3 \quad \text{S20}$$

$$a2zul = a2zul(\alpha,\ d\alpha/dt,\ T) \quad \text{S25}$$

S30 — $|d^3(\alpha 2)/dt^3| < r2zul?$ — N

J

S35 — $|d^2(\alpha 2)/dt^2| < a2zul?$ — N

J

$$\alpha sf(t3),\ vsf(t3) \quad \text{S40}$$

$$p = |d^3(\alpha 2)/dt^3| - r3zul \quad \text{S50}$$

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1955830 A1
- EP 1600833 A2
- EP 1445075 A2
- US 20040215370 A1